# EUROPÄISCHE PATENTANMELDUNG

(11) **EP 3 467 415 A1**
(43) Veröffentlichungstag der Anmeldung: **10.04.2019**
(21) Anmeldenummer: 18194702.9
(22) Anmeldetag: 17.09.2018
(51) Int. Cl.: F25D 23/02, F16L 59/065, F16L 59/12, F25D 23/06

(54) **HAUSHALTSKÄLTEGERÄT MIT HALTEKLAMMERN ZUR BEFESTIGUNG EINES VAKUUMISOLATIONSPANELS**

(30) Priorität: 05.10.2017 DE 102017217681
(71) Anmelder: BSH Hausgeräte GmbH, 81739 München (DE)
(72) Erfinder: Maier, Marius, 73430 Aalen (DE); Raunecker, Burkhard, 89561 Frickingen (DE); Staudenmeyer, Markus, 89568 Hermaringen (DE)

(57) **Zusammenfassung**

Die Erfindung betrifft ein Haushaltskältegerät (1) mit einem Geräteteil (2, 7) das ein Außenteil (3, 8) und ein dazu separates Innenteil (4, 9) aufweist, wobei zwischen dem Außenteil (3, 8) und dem Innenteil (4, 9) ein Zwischenraum (5, 10) ausgebildet ist, in dem zumindest ein Vakuumisolationspanel (11) angeordnet ist, welches mit einer Haltevorrichtung (12) gehalten ist, wobei die Haltevorrichtung (12) eine Mehrzahl von separaten und jeweils einstückigen Halteklammern (13) aufweist, die das Vakuumisolationspanel (11) jeweils randseitig umgreifen und halten.

## Beschreibung

Die Erfindung betrifft ein Haushaltskältegerät mit einem Geräteteil, das ein Außenteil und ein dazu separates Innenteil aufweist. Zwischen dem Außenteil und dem Innenteil ist ein Zwischenraum ausgebildet, in dem zumindest ein Vakuumisolationspanel angeordnet ist, welches mit einer Haltevorrichtung gehalten ist.

Bei Haushaltskältegeräten ist es bekannt, dass zwischen einem Innenbehälter, der einen Aufnahmeraum, wie beispielsweise ein Kühlfach oder ein Gefrierfach, begrenzt, und einem Außengehäuse ein Zwischenraum ausgebildet ist, der mit einem thermischen Isolationsmaterial gefüllt ist. Als thermisches Isolationsmaterial kann beispielsweise ein Isolationsschaum genannt werden. Darüber hinaus ist es auch bekannt, dass in diesem Zwischenraum ein sogenanntes Vakuumisolationspanel angeordnet ist. Diese plattenartigen Elemente weisen eine Hülle auf, in der ein thermisches Isolationsmaterial angeordnet ist. Darüber hinaus ist es auch bekannt, dass in einer Tür eines Haushaltskältegeräts, welches ebenfalls ein Geräteteil darstellen kann, ein derartiges Vakuumisolationspanel angeordnet ist.

Aus der JP 08014485 A ist eine entsprechende Ausgestaltung bekannt. Dort ist ein derartiges Vakuumisolationspanel mit einer Haltevorrichtung in dem Geräteteil und somit in dem Zwischenraum zwischen dem Außenteil und dem Innenteil gehalten. Diese Haltevorrichtung ist dort sehr aufwendig gestaltet, da sie aus zwei vollständig umlaufenden geschlossenen Rahmenteilen besteht. Diese sind durch komplexe Verbindungsstrukturen zu verbinden, um Randbereiche des Vakuumisolationspanels klemmen und somit halten zu können.

Durch eine derartige Ausgestaltung ist das Geräteteil im Gewicht erhöht. Andererseits können durch Fertigungs- und Montagetoleranzen Situationen auftreten, in denen die beiden Rahmenteile nicht passgenau aufeinanderzusetzen sind und dadurch die Haltewirkung des Vakuumisolationspanels beeinträchtigt ist. Ein weiterer, gegebenenfalls entscheidender Nachteil kann darin gesehen werden, dass durch diese umlaufenden Rahmenteile an spezifischen Stellen, insbesondere auch aufgrund von Montage- und Fertigungstoleranzen, Überstände und Kanten auftreten, die die Hülle des Vakuumisolationspanels verletzen können, wodurch die Funktionalität dieses Vakuumisolationspanels beeinträchtigt ist.

Es ist Aufgabe der vorliegenden Erfindung, ein Haushaltskältegerät zu schaffen, bei welchem das Halten eines Vakuumisolationspanels einfacher und sicherer ermöglicht ist.

Diese Aufgabe wird durch ein Haushaltskältegerät, welches die Merkmale nach Anspruch 1 aufweist, gelöst.

Ein Aspekt der Erfindung betrifft ein Haushaltskältegerät mit einem Geräteteil, das ein Außenteil und ein dazu separates Innenteil aufweist. Zwischen dem Außenteil und dem Innenteil ist ein Zwischenraum ausgebildet, in dem zumindest ein Vakuumisolationspanel des Haushaltskältegeräts angeordnet ist. Darüber hinaus weist das Haushaltskältegerät eine separate Haltevorrichtung auf, mit welcher das Vakuumisolationspanel in dem Zwischenraum gehalten ist. Die gegenständliche Haltevorrichtung weist eine Mehrzahl von separaten und jeweils einstückigen Halteklammern auf, die das Vakuumisolationspanel jeweils direkt halten und randseitig direkt umgreifen. Durch eine derartige Ausgestaltung werden durch im Vergleich zum Vakuumisolationspanel relativ kleine Halteklammern gezielt lokale Kontaktstelle zum Vakuumisolationspanel geschaffen. Durch diese Ausgestaltung ist die Haltevorrichtung deutlich im Gewicht reduziert. Darüber hinaus kann das Halten an spezifischen, gewünschten lokalen Stellen erzeugt werden. Dadurch ist auch die Montage vereinfacht. Es ist darüber hinaus nicht mehr erforderlich, separate Rahmenteile, wie dies im Stand der Technik erforderlich ist, zusammenzufügen, um die Haltewirkung zu erreichen. Montage- und Fertigungstoleranzen dieser Rahmenteile können daher bei der vorgeschlagenen Lösung nicht mehr auftreten und zu Beeinträchtigungen bei der Haltewirkung einerseits oder der Beschädigung des Vakuumisolationspanels andererseits einwirken.

Vorzugsweise ist vorgesehen, dass eine Halteklammer eine Aufnahmenut aufweist, in welche ein Rand des Vakuumisolationspanels eingreift. Dadurch ist eine mechanisch sichere Halterung geschaffen. Andererseits ist durch diese Ausgestaltung des Aufnahmebereichs der Halteklammer als eine Aufnahmenut auch das sichere und zielgerichtete Einführen des Vakuumisolationspanels ermöglicht. Um dann die Haltefunktion beziehungsweise die Klemmfunktion zu erreichen, sind dann nicht mehr zwei separate Teile zusammenzudrücken, sondern allein durch die Ausgestaltung der Aufnahmenut, die durch eine einstückige Halteklammer gebildet ist beziehungsweise von dieser bereitgestellt ist, auch hier ein risikoloses Anbringen des Vakuumisolationspanels ermöglicht.

Es kann vorgesehen sein, dass die die Aufnahmenut begrenzenden Wände, insbesondere am Eingang der Aufnahmenut, abgerundet sind beziehungsweise trichterartig aufgeweitet sind. Durch eine derartige Ausgestaltung können scharfe Kanten oder dergleichen vermieden werden, sodass eine Beschädigung des Vakuumisolationspanels, insbesondere der Hülle des Vakuumisolationspanels, beim Einsetzen in die Halteklammer vermieden ist.

In einer vorteilhaften Ausführung ist vorgesehen, dass eine Erstreckung einer Halteklammer in Richtung einer Randseite des Vakuumisolationspanels betrachtet maximal 1/10, insbesondere maximal 1/50, der Länge dieser Randseite des Vakuumisolationspanels beträgt, an welcher die Halteklammer randseitig angeordnet ist. Durch eine derartige Ausgestaltung ist die Halteklammer in dieser Ausmaßrichtung betrachtet sehr klein im Vergleich zum Vakuumisolationspanel. Die oben genannten Vorteile werden dadurch im besonderen Maße erreicht. Darüber hinaus kann die Anbringung der Halteklammer auch in spezifischen kleinen und bauraumbegrenzten Bereichen in dem Zwischenraum angeordnet werden, sodass auch hier die lokale und dennoch sichere Halterung des Vakuumisolationspanels ermöglicht ist. Denkbar ist auch, dass eine maximale Erstreckung einer Halteklammer, d.h. deren maximale Länge, maximal 1/10, insbesondere maximal 1/50, der Länge einer Randseite des Vakuumisolationspanels beträgt, an welcher die Halteklammer randseitig angeordnet ist. Denkbar ist auch, dass eine maximale Erstreckung einer Halteklammer, d.h. deren maximale Länge, weniger als 15 cm, vorzugsweise weniger als 10 cm und weiter vorzugsweise weniger als 7 cm beträgt.

Vorzugsweise ist vorgesehen, dass eine Halteklammer an einer Innenseite des Außenteils oder an einer Außenseite des Innenteils angeordnet ist. Auch hier kann dann situationsabhängig die Positionierung der Halteklammern erfolgen, sodass eine bedarfsgerechte Positionierung des zumindest einen Vakuumisolationspanels erreicht ist.

Vorzugsweise ist vorgesehen, dass eine Halteklammer formschlüssig an zwei in einem Winkel zueinander angeordneten Innenseiten des Außenteils angeordnet ist. Dadurch wird eine einfache und dennoch positionssichere Halterung erreicht. Insbesondere ist dies dann ermöglicht, wenn an dem gegenüberliegenden Bereich des Außenteils eine weitere Halteklammer angeordnet ist, insbesondere auch an zwei in einem Winkel zueinander angeordneten Innenseiten des Außenteils angeordnet ist und sich das Vakuumisolationspanel über die gesamte lichte Weite zwischen diesen beiden gegenüberliegenden Halteklammern erstreckt. Dadurch wird quasi erreicht, dass das Vakuumisolationspanel und diese gegenüberliegenden Halteklammern zwischen den Innenseiten des Außenteils verspannt beziehungsweise verklemmt sind und somit auch bereits dadurch eine Positionsfixierung erreicht ist. Insbesondere ist dies dahingehend ausreichend, dass diese vorläufige Halterung nur bis zu einem derartigen Zeitpunkt der Fertigung des Haushaltskältegeräts erforderlich ist, bis in diesem Zwischenraum ein weiteres Material, insbesondere ein Isolationsschaum, eingebracht ist, der das restliche Volumen des Zwischenraums füllt. Durch dieses zusätzliche Einbringen des Isolationsschaums ist dann auch diese vorläufige Lage der Halteklammern und des Vakuumisolationspanels ohnehin dann fixiert und stabilisiert.

Es kann auch vorgesehen sein, dass eine Halteklammer an einer Innenseite des Außenteils angeklebt ist. Beispielsweise kann hier ein Flüssigklebstoff oder ein Klebeband, insbesondere ein beidseitig klebendes Klebeband, vorgesehen sein. Dies kann insbesondere dann vorgesehen sein, wenn eine Halteklammer nicht in einem, wie oben erläutert, Eckbereich zwischen zwei in einem Winkel zueinander angeordneten Innenseiten eines Außenteils oder eines Innenteils angeordnet werden kann.

Es kann vorgesehen sein, dass die Halteklammer im Querschnitt eine U-Form aufweist. Die Halteklammer ist dadurch geometrisch sehr einfach aufgebaut und darüber hinaus auch kompakt gestaltet und dennoch ist eine sichere und mechanisch stabile Halterung des Vakuumisolationspanels an der Halteklammer insbesondere in dem U-Bereich ermöglicht.

Vorzugsweise ist vorgesehen, dass an gegenüberliegenden Randseiten des Vakuumisolationspanels jeweils zumindest eine Halteklammer zum randseitigen Halten angeordnet ist. Bereits eine derartige Minimalkonfiguration einer Anzahl an Halteklammern kann dann ausreichen, um das Vakuumisolationspanel zu halten. Insbesondere ist eine Vormontageposition vor dem Einbringen eines Isolationsschaums, der den restlichen Volumenbereich des Zwischenraums dann ergänzend auffüllt, dann ausreichend.

In besonders vorteilhafter Weise ist durch diese kleine Dimensionierung der Halteklammern auch ein unerwünschtes Reduzieren der thermischen Isolationswirkung in dem Zwischenraum vermieden.

Vorzugsweise ist vorgesehen, dass das Geräteteil ein Gehäuse des Haushaltskältegeräts ist, welches als Außenteil ein Außengehäuse und welches als Innenteil einen darin angeordneten Innenbehälter aufweist. Der Innenbehälter begrenzt mit seinen Wänden zumindest einen Aufnahmeraum für Lebensmittel. Zwischen dem Außengehäuse und dem Innenbehälter ist dieser Zwischenraum angeordnet, in dem das zumindest eine Vakuumisolationspanel durch eine Mehrzahl von Halteklammern gehalten ist.

In einer weiteren Ausführung kann vorgesehen sein, dass das Geräteteil eine Tür des Haushaltskältegeräts ist. Diese Tür ist an einem Gehäuse des Haushaltskältegeräts schwenkbar angeordnet. Bei einer Ausgestaltung des Geräteteils als Tür weist diese als Außenteil eine Außenschale beziehungsweise Frontschale auf. Als Innenteil beziehungsweise Innenschale ist ein im geschlossenen Zustand der Tür dem Aufnahmeraum zugewandtes Bauteil zu sehen. Zwischen dieser Außenschale und der Innenschale ist wiederum ein Zwischenraum ausgebildet, in dem das Vakuumisolationspanel mit einer Mehrzahl von Halteklammern gehalten ist. Auch bei einer Ausgestaltung als Tür kann der von dem Vakuumisolationspanel noch nicht ausgefüllte Teilbereich des Zwischenraums zumindest bereichsweise durch ein weiteres thermisches Isolationsmaterial, insbesondere einen Isolationsschaum, gefüllt sein.

In einer weiteren Ausführung kann vorgesehen sein, dass eine Halteklammer an einem Eckbereich eines eckig ausgebildeten Vakuumisolationspanels angeordnet ist. Durch eine derartige Ausgestaltung wird das Halten einer derartigen Halteklammer sowohl in eine Orientierung in Höhenrichtung des Haushaltskältegeräts betrachtet als auch in eine Orientierung in Breitenrichtung des Haushaltskältegeräts betrachtet erreicht. In dem Zusammenhang kann es dann bereits ausreichen, dass in einem viereckigen Vakuumisolationspanel nur vier Halteklammern erforderlich sind, die an den Eckbereichen angeordnet sind.

Vorzugsweise ist eine Halteklammer aus EPS (expandierter Polystyrolschaum) oder EPP (expandierfähiges Polypropylen) ausgebildet. Diese materielle Ausgestaltung ist besonders vorteilhaft bezüglich der thermischen Isolationswirkung, da die Halteklammern dann nicht als Kältebrücken dienen.

In einer weiteren Ausführung kann vorgesehen sein, dass eine Halteklammer aus Aerogel ausgebildet ist. Auch dies ist ein vorteilhaftes Material, um die thermische Isolationswirkung im Zwischenraum nicht unerwünscht zu beeinflussen. Darüber hinaus ist Aerogel ein besonders leichtgewichtiges Material.

In besonders vorteilhafter Weise ist das Vakuumisolationspanel derart in dem Zwischenraum angeordnet, dass es ohne direkten Kontakt zu dem Außenteil und dem Innenteil ist. Lediglich indirekt über Halteklammern ist diesbezüglich ein mechanischer Kontakt zu einem Außenteil und/oder einem Innenteil gegeben. Eine derartige schwimmende Lagerung des Vakuumisolationspanels ist dahingehend vorteilhaft, dass sich keine unerwünschten Verformungen des Außenteils oder des Innenteils bei der Fertigung des Haushaltskältegeräts ergeben und sich diesbezüglich dann die Formgebung des Vakuumisolationspanels nach außen hin sichtbar an dem Außenteil und/oder dem Innenteil abzeichnen würde. Darüber hinaus ist es gerade durch die Halteklammern nicht mehr erforderlich, wie dies bei herkömmlichen anderweitigen Befestigungsmöglichkeiten eines Vakuumisolationspanels der Fall ist, dass entsprechende Anpresskräfte zu erzeugen sind, um ein derartiges Vakuumisolationspanel direkt im Zwischenraum an ein Innenteil oder ein Außenteil anbringen zu können. Ein derartiges Anpressen wird bei der vorgeschlagenen Ausgestaltung nicht mehr durchgeführt.

Mit Angaben "oben", "unten", "vorne", "hinten, "horizontal", "vertikal", "Tiefenrichtung", "Breitenrichtung", "Höhenrichtung" etc. sind die bei bestimmungsgemäßen Gebrauch und bestimmungsgemäßem Anordnen des Geräts gegebenen Positionen und Orientierungen angegeben.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen.

Ausführungsbeispiele der Erfindung werden nachfolgend anhand schematischer Zeichnungen näher erläutert. Es zeigen:
- Fig. 1: eine vereinfachte Horizontalschnittdarstellung durch ein Ausführungsbeispiel eines erfindungsgemäßen Haushaltskältegeräts;
- Fig. 2: eine schematische Darstellung eines Ausführungsbeispiels eines Geräteteils mit darin mit Halteklammern montiertem Vakuumisolationspanel;
- Fig. 3: eine weitere Schnittdarstellung durch ein Ausführungsbeispiel eines Geräteteils mit darin mit Halteklammern montiertem Vakuumisolationspanel; und
- Fig. 4: eine schematische Darstellung eines Vakuumisolationspanels mit beispielhaften Positionen für Halteklammern.

In den Figuren werden gleiche oder funktionsgleiche Elemente mit den gleichen Bezugszeichen versehen.

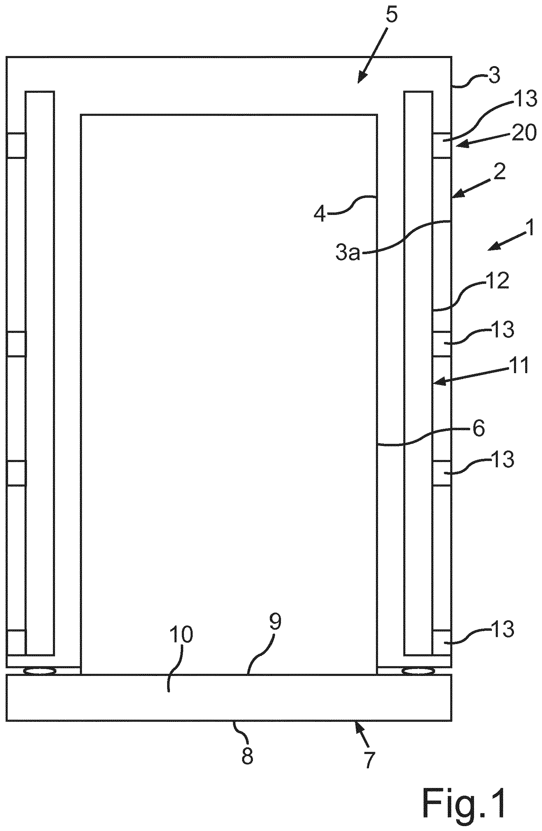

In Fig. 1 ist in einer Horizontalschnittdarstellung ein Haushaltskältegerät 1 gezeigt, welches ein Gehäuse 2 aufweist. Das Gehäuse 2 ist ein Ausführungsbeispiel für ein Geräteteil des Haushaltskältegeräts 1. Das Gehäuse 2 weist ein Außengehäuse 3 auf, welches ein Ausführungsbeispiel für ein Außenteil ist. Darüber hinaus weist das Haushaltskältegerät 1 einen Innenbehälter 4 auf, der ein Ausführungsbeispiel für ein Innenteil ist. Der Innenbehälter 4 ist in dem Außengehäuse 3 angeordnet. Zwischen dem Innenbehälter 4 und dem Außengehäuse 3 ist ein Zwischenraum 5 ausgebildet. In dem Zwischenraum 5 ist thermisches Isolationsmaterial eingebracht. Der Innenbehälter 4 begrenzt mit seinen Wänden zumindest einen Aufnahmeraum 6 für Lebensmittel, der ein Kühlfach oder ein Gefrierfach sein kann.

Darüber hinaus weist das Haushaltskältegerät 1 eine Tür 7 auf, die ein weiteres Ausführungsbeispiel für ein Geräteteil sein kann. Die Tür 7 weist eine Außenschale 8 als Außenteil auf. Des Weiteren weist die Tür 7 eine Innenschale 9 auf, welches ein weiteres Ausführungsbeispiel für ein Innenteil ist. Die Tür 7 weist ebenfalls einen Zwischenraum 10 zwischen der Außenschale 8 und der Innenschale 9 auf, wobei dieser Zwischenraum 10 mit einem thermischen Isolationsmaterial gefüllt ist. Die Tür 7 ist schwenkbar an dem Gehäuse 2 angeordnet.

In einem Ausführungsbeispiel ist vorgesehen, dass zumindest ein Vakuumisolationspanel 11 in dem Zwischenraum 5 angeordnet ist. Das plattenförmige Vakuumisolationspanel11 weist eine Hülle 12 auf, in dem ein thermisches Isolationsmaterial angeordnet ist. Sowohl die Größe als auch die Position des Vakuumisolationspanels 11 sind lediglich beispielhaft zu verstehen. Das Vakuumisolationspanel 11 ist beabstandet zu dem Innenbehälter 4 und auch beabstandet zu dem Außengehäuse 3 angeordnet. Es ist somit schwimmend in dem Zwischenraum 5 gelagert.

Es ist vorgesehen, dass das Vakuumisolationspanel 11 mit einer Haltevorrichtung 20 in dem Zwischenraum 5 gehalten ist. Die Haltevorrichtung 20 weist eine Mehrzahl von separaten und jeweils insbesondere einstückig ausgebildeten Halteklammern 13 auf. Sowohl die in Fig. 1 gezeigte Anordnung als auch die Anzahl der Halteklammern 13 sind lediglich beispielhaft zu verstehen. Im gezeigten Ausführungsbeispiel sind die Halteklammern 13 direkt an einer Innenseite 3a des Außengehäuses befestigt. Die Halteklammern 13 sind jeweils einstückig ausgebildet. Sie sind insbesondere aus einem Material mit einem niedrigen Wärmeleitkoeffizienten ausgebildet. Beispielsweise kann eine Halteklammer 13 aus EPP oder EPS oder Aerogel ausgebildet sein.

In einer vorteilhaften Ausführung ist vorgesehen, dass das restliche Volumen des Zwischenraums 5, welches nicht durch die Vakuumisolationspanele 11 gefüllt ist, mit einem dazu unterschiedlichen weiteren thermischen Isolationsmaterial, insbesondere einem Isolationsschaum, gefüllt ist. Beispielhaft ist in Fig. 1 auch auf der gegenüberliegenden Seite ein weiteres Vakuumisolationspanel gezeigt, welches ebenfalls mit einer Mehrzahl von separaten und jeweils einstückigen Halteklammern auch dort an dem Außengehäuse 3 befestigt ist. Dieses weitere Vakuumisolationspanel und die Halteklammern sind dort, insbesondere auch der Übersichtlichkeit dienend, und da der Aufbau identisch zu den erläuterten Halteklammern 13 und dem Vakuumisolationspanel 11 ist, nicht weiter mit Bezugszeichen versehen.

Zusätzlich oder anstatt dazu kann in einem weiteren Ausführungsbeispiel auch in dem Zwischenraum 10 ein Vakuumisolationspanel angeordnet sein, welches berührungslos zu der Außenschale 8 und der Innenschale 9 darin gehalten ist, insbesondere mit einer Mehrzahl von Halteklammern 13.

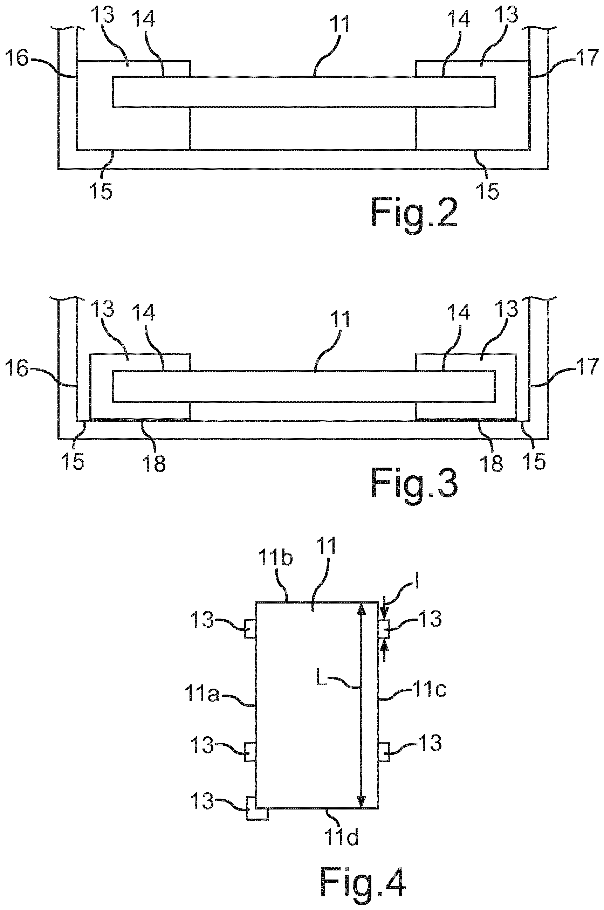

In Fig. 2 ist in einer Schnittdarstellung ein Ausführungsbeispiel gezeigt, bei welchem ein Vakuumisolationspanel 11 in der Schnittdarstellung an zwei gegenüberliegenden Halteklammern 13 gehalten ist. Die Halteklammern 13 weisen jeweils in dieser Schnittdarstellung eine U-Form auf. Sie weisen jeweils eine Aufnahmenut 14 auf, in die das Vakuumisolationspanel 11 mit gegenüberliegenden Randseiten jeweils eintauschend angeordnet ist. Wie hier zu erkennen ist, sind die Halteklammern 13 jeweils formschlüssig an zwei jeweils in einem Winkel, insbesondere 90°, orientierten Innenseiten 15 und 16 eines Außenteils oder eines Innenteils eines Geräteteils des Haushaltskältegeräts 1 angeordnet. So ist die eine Halteklammer 13 an den diesbezüglichen Innenseiten 15 und 16 formschlüssig angeordnet und die weitere Halteklammer 13 an der Innenseite 15 und einer dazu in einem Winkel, insbesondere 90°, orientierten weiteren Innenseite 17 formschlüssig anliegend. Durch eine derartige Ausgestaltung ist das Vakuumisolationspanel 11 in einer Vormontageposition bereits ausreichend gehalten. Eine finale Positionsfixierung erfolgt dann durch das vorzugsweise Einbringen des bereits genannten Isolationsschaums in das restliche Volumen des Zwischenraums zwischen dem Außenteil und dem Innenteil dieses beispielhaften Geräteteils.

In Fig. 3 ist in entsprechender Darstellung wie in Fig. 2 ein weiteres Ausführungsbeispiel gezeigt. Hier sind wiederum im Querschnitt zwei gegenüberliegende Halteklammern 13 gezeigt, die das Vakuumisolationspanel 11 halten. Bei dieser Ausführung sind die Halteklammern 13 nur an einer Innenseite, hier der Innenseite 15, an einem Innenteil oder einem Außenteil des Geräteteils angeordnet. Es ist hier insbesondere vorgesehen, dass die Halteklammern 13 mit einer Klebeverbindung 18 an dieser nur einen Innenseite 15 befestigt sind. Die Klebeverbindung 18 kann ein Flüssigklebstoff sein, wie beispielsweise ein Hotmelt. Eine Klebeverbindung 18 kann jedoch auch durch als ein insbesondere doppelseitiges Klebeband ausgebildet sein. Auch hier ist dann insbesondere bei einem im Fertigungsverfahren nachfolgenden weiteren Schritt das Befüllen des restlichen Volumens des Zwischenraums, der nicht durch das Vakuumisolationspanel 11 gefüllt ist, vorgesehen, insbesondere mit einem Isolationsschaum.

In der schematischen Fig. 4 ist ein beispielhaftes Vakuumisolationspanel 11 gezeigt, welches hier eine viereckige Platte ist. Das Vakuumisolationspanel 11 weist Randseiten 11a, 11b, 11c und 11d auf. Beispielsweise können Halteklammern 13 an gegenüberliegenden Randseiten 11a und 11c angeordnet sein. Es kann vorgesehen sein, dass an jeder Randseite 11a bis 11d jeweils zumindest eine Halteklammer 13 ausgebildet ist. Es können aber auch an zumindest einer Randseite 11a bis 11d mehrere Halteklammern beabstandet zueinander angeordnet sein. Zusätzlich oder anstatt dazu kann vorgesehen sein, dass an Eckbereichen zwischen anmündenden Randseiten 11a bis 11d eine Halteklammer 13, wie dies in Fig. 4 im unteren linken Eckbereich gezeigt ist, angeordnet ist. In dem Zusammenhang kann bei einer Ausführung auch vorgesehen sein, dass insbesondere nur an den vier Eckbereichen jeweils eine einstückige Halteklammer 13 ausgebildet ist.

Wie in Fig. 4 zu erkennen ist, ist in einer vorteilhaften Ausführung vorgesehen, dass je Erstreckung einer Halteklammer 13 in Richtung einer Randseite, hier beispielhaft die Randseite 11c, betrachtet maximal 1/10, insbesondere maximal 1/50, der Länge dieser Randseiten 11c des Vakuumisolationspanels 11 beträgt, an welcher diese Halteklammer 13 randseitig angeordnet ist. Die Länge I beträgt somit maximal 1/10, insbesondere maximal 1/50 der Länge L der Randseite 11c. Insbesondere gilt dies auch für alle anderen Halteklammern 13 jeweils entsprechend.

### Bezugszeichenliste

- 1: Haushaltskältegerät
- 2: Gehäuse
- 3: Außengehäuse
- 3a: Innenseite
- 4: Innenbehälter
- 5: Zwischenraum
- 6: Aufnahmeraum
- 7: Tür
- 8: Außenschale
- 9: Innenteil
- 10: Zwischenraum
- 11: Vakuumisolationspanel
- 11a: Randseite
- 11b: Randseite
- 11c: Randseite
- 11d: Randseite
- 12: Hülle
- 13: Halteklammer
- 14: Aufnahmenut
- 15: Innenseite
- 16: Innenseite
- 17: Innenseite
- 19: Klebeverbindung
- 20: Haltevorrichtung
- I: Länge
- L: Länge

## Patentansprüche

1. Haushaltskältegerät (1) mit einem Geräteteil (2, 7) das ein Außenteil (3, 8) und ein dazu separates Innenteil (4, 9) aufweist, wobei zwischen dem Außenteil (3, 8) und dem Innenteil (4, 9) ein Zwischenraum (5, 10) ausgebildet ist, in dem zumindest ein Vakuumisolationspanel (11) angeordnet ist, welches mit einer Haltevorrichtung (12) gehalten ist, **dadurch gekennzeichnet, dass** die Haltevorrichtung (12) eine Mehrzahl von separaten und jeweils einstückigen Halteklammern (13) aufweist, die das Vakuumisolationspanel (11) jeweils randseitig umgreifen und halten.

2. Haushaltskältegerät (1) nach Anspruch 1, **dadurch gekennzeichnet, dass** eine Halteklammer (13) eine Aufnahmenut (14) aufweist, in welche ein Rand des Vakuumisolationspanels (11) eingreift.

3. Haushaltskältegerät (1) nach Anspruch 1 oder 2, **dadurch gekennzeichnet, dass** eine Erstreckung (I) einer Halteklammer (13) in Richtung einer Randseite (11a, 11b, 11c, 11d) des Vakuumisolationspanels (11) betrachtet maximal 1/10, insbesondere maximal 1/50, der Länge (L) dieser Randseite (11a bis 11d) des Vakuumisolationspanels (11) beträgt, an welcher die Halteklammer (13) randseitig angeordnet ist.

4. Haushaltskältegerät (1) nach einem der vorhergehenden Ansprüche, **dadurch gekennzeichnet, dass** eine Halteklammer (13) an einer Innenseite (3a) des Außenteils (3, 8) oder an einer Außenseite des Innenteils (4, 9) angeordnet ist.

5. Haushaltskältegerät (1) nach Anspruch 4, **dadurch gekennzeichnet, dass** eine Halteklammer (13) mit einem einer Aufnahmenut (14) für das Vakuumisolationspanel (11) abgewandten Seite formschlüssig an zwei in einem Winkel zueinander angeordneten Seiten (15, 16, 17) des Außenteils (3, 8) oder des Innenteils (4, 9) angeordnet ist.

6. Haushaltskältegerät (1) nach einem der vorhergehenden Ansprüche, **dadurch gekennzeichnet, dass** eine Halteklammer (13) an einer Seite (15, 16, 17) des Außenteils (3, 8) oder des Innenteils (4, 9) angeklebt ist.

7. Haushaltskältegerät (1) nach einem der vorhergehenden Ansprüche, **dadurch gekennzeichnet, dass** eine Halteklammer (13) im Querschnitt eine U-Form aufweist.

8. Haushaltskältegerät (1) nach einem der vorhergehenden Ansprüche, **dadurch gekennzeichnet, dass** an gegenüberliegenden Randseiten (11a bis 11d) des Vakuumisolationspanels (11) jeweils zumindest eine Halteklammer (13) zum randseitigen Halten angeordnet ist.

9. Haushaltskältegerät (1) nach einem der vorhergehenden Ansprüche, **dadurch gekennzeichnet, dass** eine Halteklammer (13) an einem Eckbereich des eckigen Vakuumisolationspanels (11) angeordnet ist.

10. Haushaltskältegerät (1) nach einem der vorhergehenden Ansprüche, **dadurch gekennzeichnet, dass** das Geräteteil ein Gehäuse (2) ist, welches als Außenteil ein Außengehäuse (3) und als Innenteil einen darin angeordneten Innenbehälter (4) aufweist, der in dem Außengehäuse (3) angeordnet ist und mit seinen Wänden zumindest einen Aufnahmeraum (6) für Lebensmittel begrenzt,

11. Haushaltskältegerät (1) nach einem der vorhergehenden Ansprüche, **dadurch gekennzeichnet**, das Geräteteil eine Tür (7) des Haushaltskältegeräts (1) ist.

12. Haushaltskältegerät (1) nach einem der vorhergehenden Ansprüche, **dadurch gekennzeichnet, dass** eine Halteklammer (13) aus EPS oder EPP ausgebildet ist.

13. Haushaltskältegerät (1) nach einem der vorhergehenden Ansprüche, **dadurch gekennzeichnet, dass** eine Halteklammer (13) aus Aerogel ausgebildet ist.
